# EUROPÄISCHE PATENTSCHRIFT

(11) **EP 3 079 794 B1**
(45) Veröffentlichungstag und Bekanntmachung des Hinweises auf die Patenterteilung: **20.05.2020**
(21) Anmeldenummer: 14809649.8
(22) Anmeldetag: 10.12.2014
(51) Int. Cl.: B01D 46/00, B01D 46/10

(54) **INNENRAUMFILTER UND FILTERANORDNUNG**
CABIN AIR FILTER AND FILTER ASSEMBLY
FILTRE D'ESPACE INTÉRIEUR ET ENSEMBLE DE FILTRATION

(30) Priorität: 10.12.2013 DE 102013020382
(43) Veröffentlichungstag der Anmeldung: 19.10.2016
(73) Patentinhaber: MANN+HUMMEL GmbH, 71636 Ludwigsburg (DE)
(72) Erfinder: NEFZER, Markus, 71640 Ludwigsburg (DE); FRITZSCHING, Torsten, 71665 Vaihingen a. d. Enz (DE); RIEGER, Mario, 71638 Ludwigsburg (DE); HAIDER, Dominik, 84130 Dingolfing (DE); KESSLER, Stephan, 94419 Reisbach (DE)
(74) Vertreter: Seyboth, Matthias
(86) Internationale Anmeldenummer: PCT/EP2014/077178
(87) Internationale Veröffentlichungsnummer: WO 2015/086661

(56) Entgegenhaltungen:
- EP-A2- 1 890 043
- EP-A2- 1 961 868
- DE-A1- 19 638 790
- DE-A1-102005 031 501
- DE-A1-102008 056 793

## Beschreibung

### Technisches Gebiet

Die vorliegende Erfindung betrifft ein Filterelement, insbesondere einen Innenraumfilter zum Filtern von Luft für den Innenraum eines Fahrzeugs oder Gebäudes. Weiterhin betrifft die Erfindung eine Filteranordnung mit einem solchen Filterelement und einer Filteraufnahme.

Obwohl auf beliebige Filterelemente und -anordnungen anwendbar, werden die vorliegende Erfindung sowie die ihr zugrunde liegende Problematik nachfolgend für einen Innenraumfilter eines Kraftfahrzeugs beschrieben.

Die zunehmende Luftverunreinigung, insbesondere in Großstädten, in Verbindung mit dem Einsatz moderner Klimaanlagen macht es erforderlich, die von außen in den Innenraum eines Kraftfahrzeugs geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. absorbieren sollen. Zur Filterung von Luft für den Innenraum eines Kraftfahrzeugs werden häufig gefaltete bzw. plissierte Filtermaterialien, wie etwa Filtervliese, die einen Faltenpack bilden, eingesetzt. Hierzu wird ein zunächst flächiger Filtermaterialbogen zickzackförmig gefaltet. Das Faltenpack wird von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs installiert sein.

### Stand der Technik

Aus der Offenlegungsschrift DE 10 2008 056793 A1 ist ein Filtermodul zum Einsetzen in ein Filtergehäuse mit einem Grundkörper und einem Filterelement bekannt, wobei der Grundkörper ein Gitter und Aufnahmemittel für das Filterelement umfasst.

In der Offenlegungsschrift EP 1 890 043 A2 ist ein Filterlüfter mit Gehäuse und schwenkbarem Lüftergitter beschrieben, wobei eine Filtermatte zwischen Gehäuse und Gitter eingelegt wird. Das Lüftergitter weist Gelenkzapfen zum Führen in einer entsprechenden Führungsstruktur am Gehäuse auf.

Aus der EP 1 961 868 A2 ist ein Filterelement für einen Kühler bekannt, welcher einen Montageabschnitt mit einer Filteranlagefläche aufweist. Das Filterelement wird bei der Montage gegen einen elastischen Körper gedrückt, wodurch ein Anpressen gegen die Anlagefläche und ein Einrasten einer Rastnase am Filterelement in eine entsprechende Ausnehmung am Gehäuse erzielt wird.

Die Offenlegungsschrift DE 10 2005 031 501 A1 beschreibt einen Luftfilter für einen Verbrennungsmotor mit einem Filterelement, welches mindestens eine Lasche zum Einstecken in eine Aufnahme des Gehäuses aufweist, sodass das Filterelement gegenüber dem Gehäuse verschwenkbar gehalten ist.

Eine Aufgabe der vorliegenden Erfindung besteht darin, ein verbessertes Filterelement bereitzustellen. Dieses soll sich insbesondere durch eine einfache Montier- und Demontierbarkeit in einer entsprechenden Filteraufnahme auszeichnen.

### Offenbarung der Erfindung

Demgemäß wird ein Filterelement mit einem Filtermedium und einem Rahmen zur Befestigung des Filtermediums an oder in einer Filteraufnahme vorgeschlagen. Der Rahmen weist zumindest ein Eingriffselement und zumindest einen Schnapphaken auf. Das zumindest eine Eingriffselement ist mit einem Aufnahmeelement der Filteraufnahme für ein Verschwenken des Filterelements relativ zur Filteraufnahme um eine Schwenkachse schwenkbar in Eingriff bringbar. Der zumindest eine Schnapphaken ist mit zumindest einer Rast in der Filteraufnahme für ein Sperren eines Verschwenkens des Filterelements relativ zu der Filteraufnahme zumindest in einer ersten Richtung um die Schwenkachse verschnappbar.

Vorteilhaft kann das Filterelement ohne die Verwendung von Hilfswerkzeugen montiert und demontiert werden. Für die Montage werden zunächst das zumindest eine Eingriffselement mit dem zumindest einen Aufnahmeelement in Eingriff gebracht, um so eine Schwenkachse festzulegen. Hiernach wird das Filterelement um die Schwenkachse verschwenkt, bis der zumindest eine Schnapphaken mit der zumindest einen Rast verschnappt. Mit "Verschnappen" ist ein elastischer Formschluss gemeint, welcher dadurch erzeugt wird, dass der Schnapphaken die Rast überfährt, dabei elastisch verformt wird und somit hinter die Rast schnappt. Für die Demontage muss der zumindest eine Schnapphaken lediglich außer Eingriff mit der zumindest einen Rast gebracht werden. Hiernach kann das Filterelement bezüglich der Filteraufnahme um die Schwenkachse verschwenkt werden. Schließlich kann das zumindest eine Eingriffselement außer Eingriff mit dem Aufnahmeelement gebracht werden. Hiernach kann das Filterelement ausgetauscht werden. Auch der Kraftaufwand zur Betätigung des Schnapphakens ist vorteilhaft gering.

Der Rahmen kann - insbesondere samt dem zumindest einen Eingriffselement und/ oder dem zumindest einen Schnapphaken - an dem Filtermedium angespritzt sein. Der Rahmen kann beispielsweise rechtecksförmig oder trapezförmig sein.

Erfindungsgemäß ist an dem Rahmen zumindest eine Nut vorgesehen, welche dazu eingerichtet ist, dass ein Steg der Filteraufnahme in diese eingreift. Beispielsweise können zwei, drei, vier oder mehr solcher Nuten und eine entsprechende Anzahl Stege vorgesehen sein. Die Nuten können insbesondere an einem Längs- oder Querprofil ausgebildet sein.

Die Nuten können voneinander unterschiedlich weit beabstandet sein. So kann beispielsweise der Abstand zwischen einer ersten und einer zweiten Nut größer als der Abstand zwischen der zweiten und einer dritten Nut sein. Entsprechend sind auch die Stege angeordnet. Dadurch wird ein Poka-Yoke-Effekt erzielt. Mit anderen Worten kann so eine Montage einer falschen Filteraufnahme bzw. einer Filteraufnahme falschen Typs vermieden werden.

Gemäß einer Ausführungsform ist das zumindest eine Eingriffselement als Kulissenelement und das zumindest eine Aufnahmeelement als Kulissenführung ausgebildet. Das Kulissenelement kann beispielsweise als Zapfen und die Kulissenführung als eine korrespondierende Nut ausgebildet sein. Durch die Verwendung einer Kombination von Kulissenelement/Kulissenführung lässt sich ein definiertes in Eingriffbringen von Filterelement und Filteraufnahme einfach bewerkstelligen. Außerdem kann so die Schwenkachse so einfach definiert werden.

Das Eingriffselement kann eine labyrinthförmige Gestalt aufweisen. Eine solche ist aus einem Spritzgusswerkzeug einfach entformbar. Insbesondere eine Herstellung des Eingriffselements bzw. des Rahmens in einem einfachen Auf-Zu-Werkzeug wird so ermöglicht. Außerdem ist die labyrinthförmige Gestalt materialsparend. Ferner kann das Eingriffselement einen Vorsprung aufweisen, welcher eine maximal mögliche Ausschwenkposition des Filterelements bezüglich der Filteraufnahme definiert.

Gemäß einer weiteren Ausführungsform ist die Kulissenführung einerseits offen für ein Einführen des Kulissenelements in diese und andererseits zum Definieren der Schwenkachse zusammen mit dem Kulissenelement geschlossen ausgebildet. Ein entsprechend geschlossener Bereich weist insbesondere eine gekrümmte Führungsfläche auf, entlang derer das Kulissenelement abgleitet, um so die Schwenkachse zu definieren.

Gemäß einer weiteren Ausführungsform ist der zumindest eine Schnapphaken dazu eingerichtet, bei einem Verschwenken des Filterelements in einer zweiten Richtung um die Schwenkachse entgegengesetzt zur ersten Richtung hinter die zumindest eine Rast zu schnappen. Das Lösen der Verbindung zwischen Schnapphaken und Rast erfolgt dann dadurch, dass der Schnapphaken elastisch verformt und über die Rast in der ersten Richtung bewegt wird.

Gemäß einer weiteren Ausführungsform weist der Montagerahmen zwei parallel zueinander angeordnete Längsprofile und zwei parallel zueinander angeordnete Querprofile auf, welche senkrecht zu den Längsprofilen angeordnet sind, und wobei das zumindest eine Eingriffselement an einem der Querprofile vorgesehen ist. Das zumindest eine Eingriffselement kann insbesondere senkrecht von dem entsprechenden Querprofil abragen.

Gemäß einer weiteren Ausführungsform umfasst das Filterelement zwei Eingriffselemente, von denen jeweils eines an einem der Querprofile vorgesehen ist. Die Schwenkachse lässt sich einfach über zwei Eingriffselemente erzeugen, welche jeweils in ein korrespondierendes Aufnahmeelement der Filteraufnahme eingreifen.

Gemäß einer weiteren Ausführungsform ist der zumindest eine Schnapphaken an einem der Längsprofile vorgesehen. Der zumindest eine Schnapphaken kann insbesondere L-förmig ausgebildet sein. Am langen Schenkel des "L's" kann eine Erhebung ausgebildet sein, welche dazu eingerichtet ist, über die Rast zu schnappen. Die Erhebung kann mit einer Einführschräge vorgesehen sein.

Gemäß einer weiteren Ausführungsform sind zwei Schnapphaken vorgesehen, welche an einem gemeinsamen Längsprofil vorgesehen sind. Dadurch lässt sich das Filterelement zuverlässiger an der Filteraufnahme befestigen. Ein jeweiliger Schnapphaken rastet dann hinter eine jeweils zugeordnete Rast. In einer alternativen Ausführungsform könnten die Schnapphaken auch an einem der Querprofile angeordnet sein.

Bevorzugt ist der zumindest eine Schnapphaken und das zumindest eine Eingriffselement an gegenüberliegenden Endabschnitten des Filterelements bzw. des Rahmens ausgebildet.

Ferner wird eine Filteranordnung mit einem Filterelement wie vorstehend beschrieben und einer Filteraufnahme bereitgestellt, in oder an welcher das Filterelement befestigt ist.

Beispielsweise kann die Filteraufnahme dazu eingerichtet sein, das Filterelement derart zu halten, dass die Ebene, in der sich das Filtermedium flächig erstreckt, vertikal orientiert ist.

Das Filterelement und/oder die Filteranordnung werden bevorzugt bei einem Lastkraftwagen, insbesondere zur Filterung von Kabinenluft für das Führerhaus eines solchen, eingesetzt. Die Filteraufnahme kann an einer Schottwand des Lastkraftwagens derart befestigbar vorgesehen sein, dass das Filterelement vertikal orientiert ist.

Das Filterelement umfasst beispielsweise ein Filtermedium und ein oder mehrere Verstärkungselemente, insbesondere Seiten- und/oder Kopfbänder, welche das Filtermedium zumindest abschnittsweise verstärken, um dessen Form, insbesondere im Filterbetrieb, aufrechtzuerhalten. Die Verstärkungselemente können insbesondere einen geschlossenen oder offenen Rahmen - auch materialeinstückig - ausbilden, welcher das Filtermedium umgibt. Nach hier geltender Definition umfasst ein "Rahmen" ein oder mehrere Verstärkungselemente.

Die Verstärkungselemente können mit dem Filtermedium randseitig stoffschlüssig verbunden, insbesondere verklebt sein. Dazu können die Verstärkungselemente erhitzt und das Filtermedium in das erhitzte Material eingedrückt werden. Alternativ können die Verstärkungselemente an das Filtermedium angespritzt sein. Weiterhin kann ein Klebstoff als Zusatzwerkstoff zum Einsatz kommen. Die Verstärkungselemente können selbst aus demselben Material wie das Filtermedium hergestellt sein. Alternativ können die Verstärkungselemente als Kunststoffspritzgussbauteile ausgebildet sein. Die Verstärkungselemente können steif oder flexibel sein.

Das Filtermedium kann gefaltet oder wellenförmig ausgebildet sein. Als Faltungen sind beispielsweise Zickzack- oder W-Faltungen bekannt. Das Filtermedium kann geprägt und anschließend an Prägekanten scharfkantig gefaltet sein. Als Ausgangsmaterial kann ein flächiger Materialfilterbogen dienen, welcher entsprechend umgeformt wird. Das Filtermedium ist beispielsweise ein Filtergewebe, ein Filtergelege oder ein Filtervlies. Insbesondere kann das Filtermedium in einem Schmelz-Blas-Verfahren hergestellt sein. Das Filtermedium kann Naturfasern, wie Baumwolle, oder Kunstfasern, beispielsweise aus Polyester, Polyphenylsulfid oder Polytetrafluorethylen, aufweisen. Die Fasern können bei der Verarbeitung innen, schräg und/oder quer zur Maschinenrichtung orientiert sein. Ein entsprechendes Filterelement dient der Filterung von Luft, Fluid, also gasförmigen und/oder flüssigen Medien, beispielsweise Luft. Gasförmiges Fluid bzw. Luft umfasst hier auch Gas- bzw. Luft-Feststoffgemische oder Gas- bzw. Luft-Flüssigkeitsgemische. Beispielsweise kann eine Klimaanlage das Filterelement aufweisen. Das Filterelement kann eine Dichteinrichtung aufweisen, welche eine dem Filterelement zugeordnete Rohseite gegenüber einer Reinseite desselben abdichtet. Die Dichteinrichtung kann bauteilidentisch mit ein oder mehreren Verstärkungselementen des Filterelements ausgeführt sein. Alternativ kann die Dichteinrichtung als Zusatzbauteil ausgebildet sein. So kann die Dichteinrichtung beispielsweise an dem Filtermedium, den ein oder mehreren Verstärkungselementen, dem Filterelement oder der Filteraufnahme angebracht sein.

Die für das Filterelement beschriebenen Merkmale gelten für die Filteranordnung entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigen:
- Fig. 1:: in einer perspektivischen Ansicht einen Innenraumfilter gemäß einer Ausführungsform;
- Fig. 1A:: eine Ansicht I aus Fig. 1, wobei auch ein in Fig. 2 gezeigtes Filtergehäuse teilweise gezeigt ist;
- Fig. 1B:: eine Variante gegenüber Fig. 1A;
- Fig. 2:: in einer perspektivischen Ansicht ein Filtergehäuse gemäß einer Ausführungsform;
- Fig. 3:: in einer perspektivischen Ansicht einen Zustand beim Einsetzen des Innenraumfilters aus Fig. 1 in das Filtergehäuse aus Fig. 2; und
- Fig. 4:: eine Filteranordnung umfassend das Filterelement aus Fig. 1 und das Filtergehäuse aus Fig. 2 im montierten Zustand.

In den Figuren sind gleiche oder funktionsgleiche Elemente, sofern nichts anderes angegeben ist, mit denselben Bezugszeichen versehen worden.

### Ausführungsform(en) der Erfindung

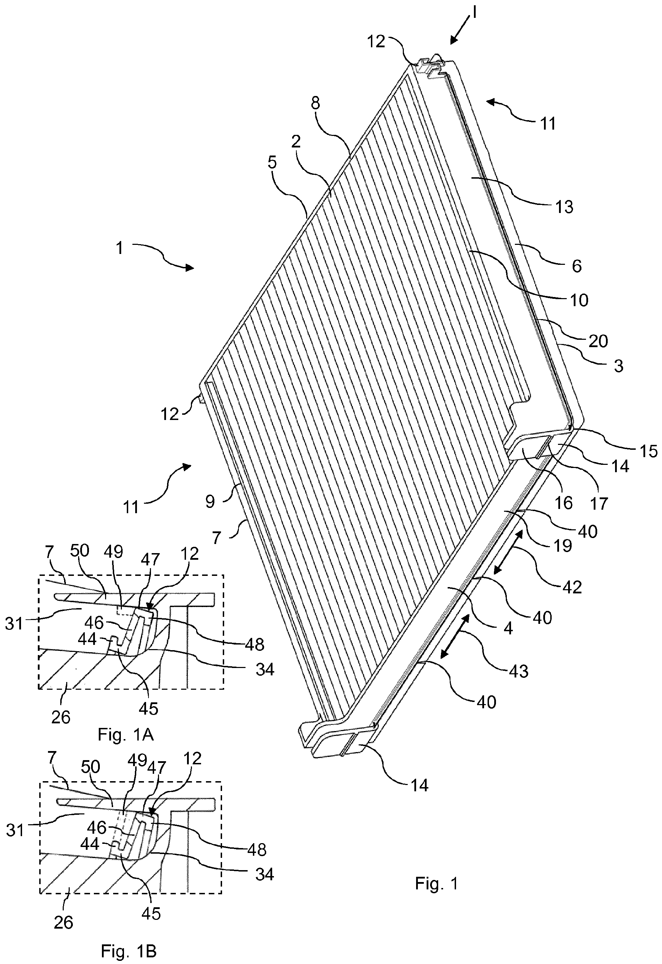

Fig. 1 zeigt einen Innenraumfilter 1. Dieser umfasst ein Filtermedium 2, welches beispielsweise gefaltet ist. In Betracht kommt beispielsweise eine Zickzack-Faltung. Auch eine wellenförmige Ausbildung des Filtermediums 2 ist möglich. Das Filtermedium 2 kann zur Partikel- und/oder Geruchsfilterung ausgebildet sein.

Weiterhin umfasst der Innenraumfilter 1 einen Rahmen 3. Der Rahmen 3 umfasst ein vorderes und ein hinteres Längsprofil 4, 5 und seitliche Querprofile 6, 7, welche rechtecksförmig miteinander verbunden sind. Der Rahmen 3 fasst das Filtermedium 2 ein, das heißt, das Filtermedium 2 ist an seinen Stirnkanten 8 sowie Endfalten 9, 10 mit dem Rahmen 3 verbunden. Insbesondere kann der Rahmen 3 an das Filtermedium 2 angespritzt sein. Der Rahmen 3 kann hierzu insbesondere als Kunststoffspritzgussbauteil ausgebildet sein.

Die Querprofile 6, 7 weisen jeweils an einem dem hinteren Längsprofil 5 zugewandten Endabschnitt Eingriffselemente 12 auf. Die Eingriffselemente 12 können beispielsweise senkrecht von einer Außenfläche 13 der Querprofile 6, 7 abstehen. Die Eingriffselemente 12 können beispielsweise, wie in Fig. 1A gezeigt, in Form labyrinthförmiger Profile ausgebildet sein, die sich einfach aus einem Spritzgusswerkzeug zum Herstellen des Rahmens 3 entformen lassen.

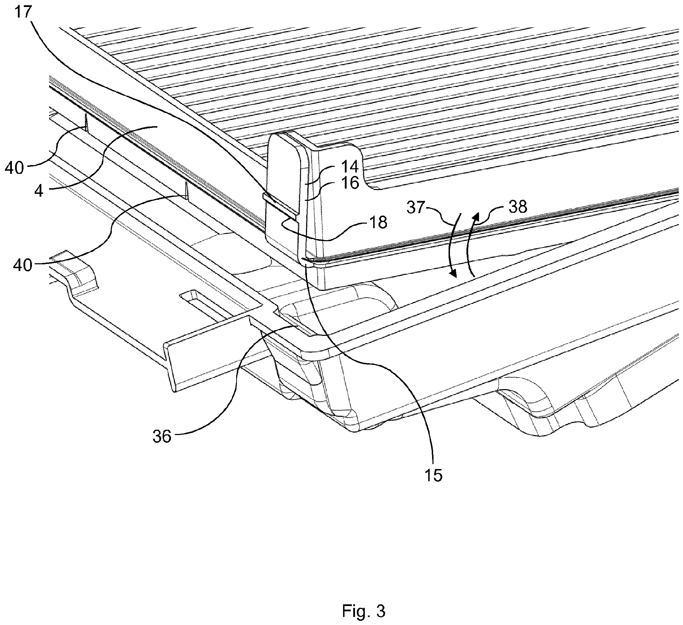

Das vordere Längsprofil 4 umfasst zwei Schnapphaken 14. Ein jeweiliger Schnapphaken 14 kann beispielsweise L-förmig mit einem kurzen Schenkel 15 und einem langen Schenkel 16 ausgebildet sein. Beispielsweise kann der lange Schenkel 16 eine Erhebung 17 umfassen, die mit einer Einführschräge 18 gebildet sein kann, wie in Fig. 3 illustriert. Die Schenkel 16 erstrecken sich dabei jeweils parallel zu einer äußeren Oberfläche 19 des vorderen Längsprofils 4.

Der Rahmen 3 kann weiterhin eine Dichtung 20 aufweisen, welche vollständig um den Rahmen 3 umläuft. Die Dichtung 20 kann als einstückiger Bestandteil des Rahmens 3 gebildet sein. Die Dichtung 20 kann insbesondere im Spritzgussverfahren einstückig mit dem Rahmen 3 hergestellt sein.

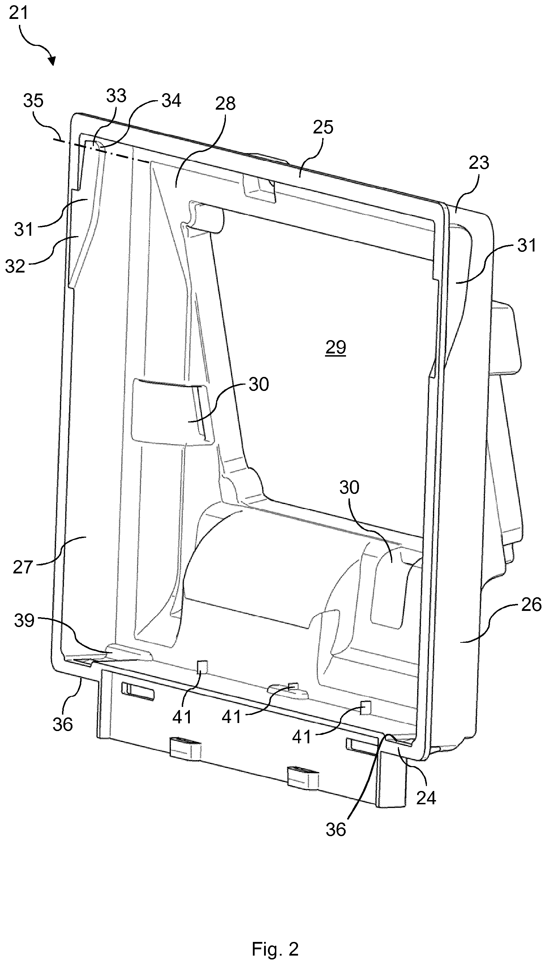

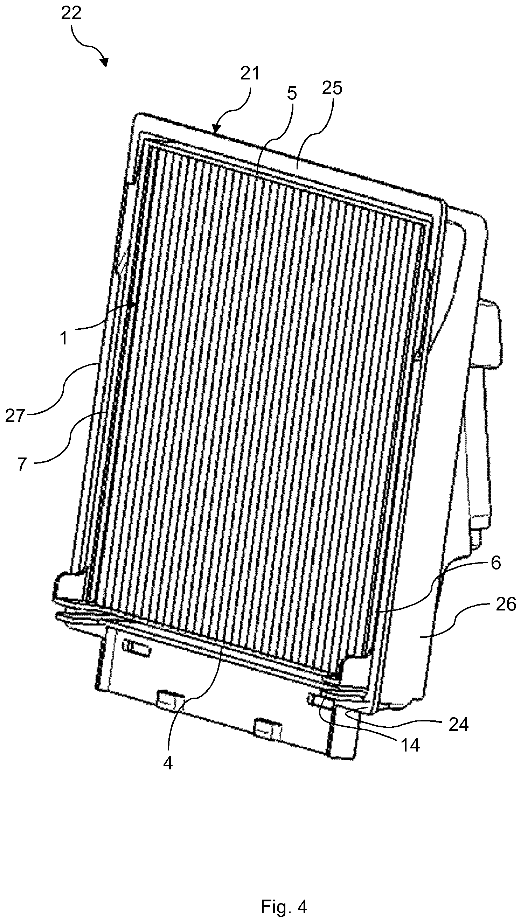

Fig. 2 zeigt ein Filtergehäuse 21, welches gemeinsam mit dem Innenraumfilter 1 im montierten Zustand eine in Fig. 4 gezeigte Filteranordnung 22 bildet.

Das Filtergehäuse 21 umfasst einen Rahmen 23, welcher korrespondierend zu dem Rahmen 3 mit Längsprofilen 24, 25 und Querprofilen 26, 27 gebildet ist. An den Rahmen 23 schließt sich nach hinten ein Formteil 28 mit einer Öffnung 29 an. Über die Öffnung 29 kann die Luftzuführung der Reinluft beispielsweise zu einem Führerhaus eines Lastkraftwagens erfolgen. Das Formteil 28 kann mit Vertiefungen 30 gebildet sein, welche Schrauben aufnehmen, mittels derer das Filtergehäuse 21 mit einer Schottwand eines Lastkraftwagens verschraubbar ist. Das Filtergehäuse 21 wie auch das Filterelement 1 sind daher im montierten Zustand bzw. im Betrieb vertikal orientiert, wie in Fig. 4 gezeigt. Das Formteil 28 kann einstückig mit dem Rahmen 23 gebildet sein. Insbesondere kann das Filtergehäuse 21 als einstückiges Kunststoffspritzgussteil gefertigt sein.

Die Querprofile 26, 27 können nun jeweils mit einem Aufnahmeelement 31 in Form einer Kulissenführung gebildet sein. Die Kulissenführung 31 weist eine Öffnung 32 für ein Einführen eines zugeordneten Eingriffselements 12 des Innenraumfilters 1 auf. In der Kulissenführung 31 gleitet ein zugeordnetes Eingriffselement 12 in einen geschlossenen Bereich 33, welcher mit einer Krümmung 34 gebildet ist. Die Krümmung 34 bildet mit einem zugeordneten Eingriffselement 12 einen Drehpunkt aus. Das labyrinthförmige Profil kann sich, wie in Fig. 1A zu erkennen, aus beispielsweise fünf geraden und winklig - annähernd einer S-Form - miteinander verbundenen Abschnitten 44, 45, 46, 47, 48 zusammensetzen. Außerdem kann das labyrinthförmige Profil einen Vorsprung 49 aufweisen, welcher eine maximal mögliche Ausschwenkposition definiert, die in Fig. 1A und 1B angedeutet ist. In der maximalen Ausschwenkposition stößt der Vorsprung gegen den oberen Begrenzungsabschnitt 50 des Aufnahmeelements 31. Somit können beim Ein- und/oder Ausbau Stellungen des Innenraumfilters 1 bezüglich des Filtergehäuses 21 vermieden werden, die zu einer Beschädigung des Innenraumfilters 1 beispielsweise an angrenzenden Bauteilen insbesondere im Bereich der Schottwand führen könnten. Die Fig. 1A und 1B unterscheiden sich hinsichtlich der Anordnung des Vorsprungs 49, nämlich einmal horizontal (Fig. 1A) und einmal vertikal (Fig. 1B) bezogen auf die flächige Erstreckung des Innenraumfilters 1.

Damit ergeben sich an einem jeweiligen Querprofil 26, 27 zwei Drehpunkte, die eine Schwenkachse 35 definieren. Um diese wird das Filterelement 1 bezüglich des Filtergehäuses 21 nach Einführen der Eingriffselemente 12 in die geschlossenen Bereiche 33 jeweiliger Querprofile 26, 27 verschwenkt. Schließlich geraten die Schnapphaken 14 in Eingriff mit einer jeweiligen Rast 36. Die Rasten 36 sind an dem Längsprofil 24 abgebildet. Dabei gleiten die Erhebungen 17 mittels der Einführschrägen 18 über die Rasten 36, wobei ein jeweiliger Schnapphaken 14 verbogen wird. Das Verschnappen geschieht in einer Schwenkrichtung 37 um die Schwenkachse 35. Nach Verrasten der Schnapphaken 14 mit einer jeweiligen Erhebung 36 ist ein Verschwenken in der entgegengesetzten Richtung 38 gesperrt. Im Übrigen liegt dann aber auch der Rahmen 3 auf entsprechenden Anschlägen 39 oder sonstigen Anschlagsflächen des Filtergehäuses 21 auf, so dass auch ein Weiterverschwenken in der Richtung 37 gesperrt ist. Insgesamt erfolgt somit eine Befestigung des Innenraumfilters 1 an dem Filtergehäuse 21 in allen sechs Freiheitsgraden.

Entlang des Längsprofils 4 können beispielsweise drei Nuten 40 vorgesehen sein. Der Abstand 42 zwischen einer ersten und einer zweiten Nut 40 kann sich beispielsweise von einem Abstand 43 zwischen der zweiten und einer dritten Nut 40 unterscheiden. Entsprechend sind auch die Stege 41 an dem Längsprofil 24 bzw. an dem Filtergehäuse 21 angeordnet. Beim Einschwenken des Innenraumfilters 1 in das Filtergehäuse 21 in der zweiten Richtung 37 fahren die Stege 41 in die Nuten 40 ein. Dadurch lässt sich ein Poka-Yoke-Effekt erzielen: Nur ein Innenraumfilter 1 des richtigen Typs kann in dem Filtergehäuse 21 verbaut werden. Außerdem können die Stege 41 das Filtergehäuse 21 verstärken.

Zum Lösen bzw. Demontieren des Innenraumfilters 1 müssen lediglich die Schnapphaken 14 betätigt werden. Hierauf geraten die Erhebungen 17 außer Eingriff mit den Rasten 36, woraufhin der Innenraumfilter 1 um die Schwenkachse 35 in der Richtung 38 geschwenkt werden kann. Hiernach, also wenn das Längsprofil 4 des Rahmens 3 aus dem Rahmen 23 herausgeschwenkt ist, können die Eingriffselemente 12 aus den Aufnahmeelementen 31 über die Öffnungen 32 herausbewegt werden.

Obwohl die Erfindung vorliegend anhand bevorzugter Ausführungsbeispiele beschrieben wurde, ist sie keineswegs darauf beschränkt, sondern vielfältig modifizierbar.

## Patentansprüche

1. Innenraumfilter (1) mit einem Filtermedium (2) und einem Rahmen (3) zur Befestigung des Innenraumfilters (1) an oder in einem Filtergehäuse (21), wobei der Rahmen (3) zumindest ein Eingriffselement (12), welches mit zumindest einem Aufnahmeelement (31) des Filtergehäuses (21) für ein Verschwenken des Innenraumfilters (1) bezüglich des Filtergehäuses (21) um eine Schwenkachse (35) schwenkbar in Eingriff bringbar ist, und zumindest einen Schnapphaken (14) aufweist, welcher mit zumindest einer Rast (36) des Filtergehäuses (21) für ein Sperren eines Verschwenkens des Innenraumfilters (1) relativ zu dem Filtergehäuse (21) zumindest in einer ersten Richtung (38) um die Schwenkachse (35) verschnappbar ist, wobei an dem Rahmen (3) zumindest eine Nut (40) vorgesehen ist, welche dazu eingerichtet ist, dass ein Steg (41) des Filtergehäuses (21) in diese eingreift.

2. Innenraumfilter nach Anspruch 1, wobei das zumindest eine Eingriffselement (12) als Kulissenelement und das zumindest eine Aufnahmeelement (31) als Kulissenführung ausgebildet ist.

3. Innenraumfilter nach Anspruch 2, wobei die Kulissenführung (31) einerseits offen für ein Einführen des Kulissenelements (12) und andererseits zum Definieren der Schwenkachse (35) zusammen mit dem Kulissenelement (12) geschlossen ausgebildet ist.

4. Innenraumfilter nach einem der Ansprüche 1 bis 3, wobei der zumindest eine Schnapphaken (14) dazu eingerichtet ist, bei einem Verschwenken des Innenraumfilters (1) in einer zweiten Richtung (37) um die Schwenkachse (35) entgegengesetzt zur ersten Richtung (38) mit der zumindest einen Rast (36) zu verschnappen.

5. Innenraumfilter nach einem der Ansprüche 1 bis 4, wobei der Rahmen (3) zwei parallele zueinander angeordnete Längsprofile (4, 5) und zwei parallel zueinander angeordnete Querprofile (6, 7) aufweist, welche senkrecht zu den Längsprofilen (4, 5) angeordnet sind, und wobei das zumindest eine Eingriffselement (12) an einem der Querprofile (6, 7) vorgesehen ist.

6. Innenraumfilter nach Anspruch 5, wobei zwei Eingriffselemente (12) vorgesehen sind, wobei jeweils eines an einem der Querprofile (6, 7) angeordnet ist.

7. Innenraumfilter nach Anspruch 5 oder 6, wobei der zumindest eine Schnapphaken (14) an einem der Längsprofile (4, 5) vorgesehen ist.

8. Innenraumfilter nach Anspruch 7, wobei zwei Schnapphaken (14) vorgesehen sind, welche an einem gemeinsamen Längsprofil (4) angeordnet sind.

9. Filteranordnung (22) mit einem Innenraumfilter (1) nach einem der Ansprüche 1 bis 8 und einem Filtergehäuse (21), in oder an welchem der Innenraumfilter (1) befestigt ist, wobei das Filtergehäuse (21) zumindest einen Steg (41) aufweist, welcher in die zumindest eine Nut (40) am Rahmen (3) des Innenraumfilters (1) eingreift.

## Claims

1. Cabin filter (1) having a filter medium (2) and a frame (3) for attaching the cabin filter (1) at or in a filter housing (21), wherein the frame (3) features at least one engagement member (12), which can be pivotally engaged with at least one receiving member (31) of the filter housing (21) for pivoting the cabin filter (1) with respect to the filter housing (21) around a swivel axis (35), and at least one snap-in hook (14) which can engage with at least one detent (36) of the filter housing (21) for locking a pivoting movement of the cabin filter (1) relative to the filter housing (21) at least in a first direction (38) around the swivel axis (35), wherein at least one groove (40) is provided on the frame (3) and arranged such that a web (41) of the filter housing (21) can engage therein.

2. Cabin filter according to claim 1, wherein the at least one engagement member (12) is designed as slide element and the at least one receiving member (31) is designed as slide guide.

3. Cabin filter according to claim 2, wherein the slide guide (31) is designed, on the one hand, to be open for insertion of the slide element (12) and, on the other hand, closed for defining the swivel axis (35) together with the slide element (12).

4. Cabin filter according to one of the claims 1 to 3, wherein the at least one snap-in hook (14) is adapted to snap with the at least one detent (36) when the cabin filter (1) is pivoted in a second direction (37) around the swivel axis (35) opposite to the first direction (38).

5. Cabin filter according to one of the claims 1 to 4, wherein the frame (3) features two longitudinal profiles (4, 5) disposed parallel to one another and two transverse profiles (6, 7) disposed parallel to one another, which are located perpendicular to the longitudinal profiles (4, 5), and wherein the at least one engagement member (12) is provided on one of the transverse profiles (6, 7).

6. Cabin filter according to claim 5, wherein two engagement members (12) are provided, wherein one is disposed on each of the transverse profiles (6, 7).

7. Cabin filter according to claim 5 or 6, wherein the at least one snap-in hook (14) is provided on one of the longitudinal profiles (4, 5).

8. Cabin filter according to claim 7, wherein two snap-in hooks (14) are provided which are arranged on a common longitudinal profile (4).

9. Filter arrangement (22) with a cabin filter (1) according to one of the claims 1 to 8 and a filter housing (21) in or on which the cabin filter (1) is attached, wherein the filter housing (21) features at least one web (41) which engages in the at least one groove (40) on the frame (3) of the cabin filter (1).

## Revendications

1. Filtre d'habitacle (1) avec un milieu filtrant (2) et un cadre (3) pour la fixation du filtre d'habitacle (1) sur ou dans un boîtier de filtre (21), dans lequel le cadre (3) présente au moins un élément d'engagement (12) qui peut être mis en prise en pivotant avec au moins un élément de réception (31) du boîtier de filtre (21) pour faire pivoter le filtre d'habitacle (1) par rapport au boîtier de filtre (21) autour d'un axe de pivotement (35), et au moins un crochet d'encliquetage (14) qui peut être encliqueté avec au moins un cran d'arrêt (36) du boîtier de filtre (21) pour bloquer un pivotement du filtre d'habitacle (1) par rapport au boîtier de filtre (21) au moins dans une première direction (38) autour de l'axe de pivotement (35), dans lequel au moins une rainure (40) est prévue sur le cadre (3) et disposée pour qu'une nervure (41) du boîtier de filtre (21) s'y engage.

2. Filtre d'habitacle selon la revendication 1, dans lequel l'élément d'engagement (12), au moins au nombre d'un, est conçu comme élément coulissant et l'élément de réception (31), au moins au nombre d'un, est conçu comme guide de coulisse.

3. Filtre d'habitacle selon la revendication 2, dans lequel le guide de coulisse (31) est conçu pour être ouvert d'une part pour l'insertion de l'élément coulissant (12) et fermé d'autre part pour définir l'axe de pivotement (35) avec l'élément coulissant (12).

4. Filtre d'habitacle selon l'une des revendications 1 à 3, dans lequel le crochet d'encliquetage (14), au moins au nombre d'un, est adapté pour s'encliqueter avec le cran d'arrêt (36), au moins au nombre d'un, lorsque le filtre d'habitacle (1) est pivoté dans une seconde direction (37) autour de l'axe de pivotement (35) opposé à la première direction (38).

5. Filtre d'habitacle selon l'une des revendications 1 à 4, dans lequel le cadre (3) présente deux sections longitudinales (4, 5) disposées parallèlement l'une à l'autre et deux sections transversales (6, 7) disposées parallèlement l'une à l'autre, qui sont disposées perpendiculairement aux sections longitudinales (4, 5), et dans lequel l'élément d'engagement (12), au moins au nombre d'un, est prévu sur l'une des sections transversales (6, 7).

6. Filtre d'habitacle selon la revendication 5, dans lequel deux éléments d'engagement (12) sont prévus, dans lequel un est disposé sur chacune des sections transversales (6, 7).

7. Filtre d'habitacle selon la revendication 5 ou 6, dans lequel le crochet d'encliquetage (14), au moins au nombre d'un, est prévu sur l'une des sections longitudinales (4, 5).

8. Filtre d'habitacle selon la revendication 7, dans lequel sont prévus deux crochets d'encliquetage (14) qui sont disposés sur une section longitudinale commune (4).

9. Agencement de filtre (22) avec un filtre d'habitacle (1) selon l'une des revendications 1 à 8 et un boîtier de filtre (21) dans ou sur lequel le filtre d'habitacle (1) est fixé, dans lequel le boîtier de filtre (21) présente au moins une nervure (41) qui s'engage dans la rainure (40), au moins au nombre d'une, sur le cadre (3) du filtre d'habitacle (1).
